# EUROPÄISCHE PATENTANMELDUNG

(11) **EP 3 995 274 A1**
(43) Veröffentlichungstag der Anmeldung: **11.05.2022**
(21) Anmeldenummer: 21206667.4
(22) Anmeldetag: 05.11.2021
(51) Int. Cl.: B27D 1/04, B27D 1/06, B27D 1/08, B27K 3/15, B27N 1/00, B27N 3/04, B27N 3/20, B27N 7/00, B32B 21/14

(54) **FORMTEIL**

(30) Priorität: 06.11.2020 DE 102020129345
(71) Anmelder: Blomberger Holzindustrie GmbH, 32825 Blomberg (DE)
(72) Erfinder: Kobrock, Andreas, 33034 Brakel (DE)
(74) Vertreter: Kalkoff & Partner Patentanwälte mbB

(57) **Zusammenfassung**

Verfahren zum Herstellen eines Formteils, aufweisend ein Furnier und ein duroplastisches Kunstharz. Um ein Formteil aus einem Furnier und einem duroplastischen Kunstharz bereitzustellen, dass auch bei hoher Beanspruchung einsetzbar ist, ist ein Verfahren mit den Schritten vorgesehen
- Imprägnieren des Furniers mit dem duroplastischen Kunstharz,
- Einlegen des imprägnierten Furniers in eine Form,
- Schließen der Form und Pressen des imprägnierten Furniers bei erhöhter Temperatur und bei erhöhtem Druck
- Verflüssigen des duroplastischen Kunstharzes und mindestens teilweises Auflösen des Faserverbunds des Furniers,
- Aushärten des duroplastischen Kunstharzes und
- Entformen des Formteils.

## Beschreibung

Die Erfindung betrifft Verfahren zum Herstellen eines Formteils, aufweisend ein Furnier und duroplastischen Kunstharz sowie das Formteil.

Formteile aus Furnier und duroplastischem Kunstharz sind bekannt, z. B. aus der DE 100 30 564 A1. Sie werden z. B. eingesetzt zum Herstellen von Sitzschalen für Stühle, für Behälter oder Abdeckungen und dergleichen, indem Furniere mit dem duroplastischen Kunstharz beschichtet werden, in eine Form geschichtet werden und anschließend unter einem Druck von bis zu 2 - 2,5 N/mm²und erhöhter Temperatur von maximal 120 °C verpresst werden. Solche Formteile weisen als typisches Merkmal eine optisch nahezu unveränderte Holzoberfläche auf.

Nachteilig an den bekannten Formteilen ist, dass sie nicht für den Einsatz bei hoher Beanspruchung, insbesondere bei hoher mechanischer Beanspruchung einsetzbar sind.

Es ist daher Aufgabe der Erfindung, ein Formteil aus einem Furnier und einem duroplastischen Kunstharz bereitzustellen, dass auch bei hoher Beanspruchung einsetzbar ist. Diese Aufgabe wird gelöst durch ein Verfahren nach Anspruch 1 und ein Formteil nach Anspruch 8.

Das erfindungsgemäße Verfahren zum Herstellen eines Formteils, aufweisend ein Furnier und duroplastischen Kunstharz, umfasst die Schritte:
- Imprägnieren des Furniers mit dem duroplastischen Kunstharz,
- Einlegen des imprägnierten Furniers in eine Form,
- Schließen der Form und Pressen des imprägnierten Furniers bei erhöhter Temperatur und bei erhöhtem Druck
- Verflüssigen des duroplastischen Kunstharzes und mindestens teilweises Auflösen des Faserverbunds des Furniers,
- Aushärten des duroplastischen Kunstharzes und
- Entformen des Formteils.

Als wesentlicher Schritt des erfindungsgemäßen Verfahrens ist zum einen anzusehen, dass das Furnier mit duroplastischem Kunstharz imprägniert wird. Das Furnier ist ein natürlicher Faserverbund von Holzfasern, die im Wesentlichen einen parallelen Faserverlauf zeigen. Das Furnier, oft aus Buche oder einem anderen Laubholz, wird gedämpft und dann durch Schälen oder Schneiden hergestellt, da sich das Holz bei hohem Feuchtegehalt (über 100 Gew.-% bezogen auf atro Holz) leichter zu Furnieren verarbeiten lässt. Das Kunstharz wird vorzugsweise beidseitig auf das feuchte Furnier aufgetragen und anschließend wird das mit Kunstharz versehene Furnier getrocknet. Das Furnier wird mit einem Feuchtegehalt von maximal 8 Gew.-%, bevorzugt von bis zu 6 Gew.-% bezogen auf atro Holz eingesetzt (atro Holz: bei 105 °C bis zur Gewichtskonstanz getrocknet). Das duroplastische Kunstharz dringt während des Trocknens zum Imprägnieren des Furniers in flüssiger Form in das Furnier ein, wobei es z. B. in Zwischenräume der Fasern oder kleinere Risse (Mikrorisse) der Fasern eindringt und entweichendes Wasser bzw. Wasserdampf ersetzt. Optional kann das auf und in dem getrockneten Furnier befindliche, duroplastische Kunstharz dann bis zur weiteren Verwendung ebenfalls getrocknet werden, ohne dass das Kunstharz dabei aushärtet. Bereits in diesem Stadium werden Fasern des Furniers von noch nicht ausgehärtetem Kunstharz umgeben. Typische duroplastische Kunstharze sind Aminoplaste, z. B. Phenolharz, Melaminharz, Formaldehydharz oder Harnstoffharz oder Mischungen oder Kombinationen der vorgenannten Harze. Erfindungsgemäß werden keine thermoplastischen Harze eingesetzt.

Erfindungsgemäß werden mehr als 20 Gew.-% duroplastisches Kunstharz, bevorzugt mehr als 25 Gew.-% und bis zu 40 Gew.-% duroplastisches Kunstharz bezogen auf das Gewicht des Furniers eingesetzt, jeweils bezogen auf 100% Feststoffgehalt des Kunstharzes. Das Kunstharz weist dabei in der Regel einen Feststoffgehalt von 48% bis 52% auf. Es muss ausreichend viel Kunstharz eingesetzt werden, um ein Einbetten der Fasern des Furniers im Formteil zu bewirken.

Das Furnier oder nach einer vorteilhaften Ausführung die mindestens drei Furniere werden in die Form eingelegt. Optional werden die Furniere vor dem Einlegen in die Form oder beim Schließen der Form auf die jeweilige Form zugeschnitten, so dass die kunstharzimprägnierten Furniere genau in die jeweilige Form passen. Das erfindungsgemäße Verfahren erlaubt es aber auch mit überstehenden Furnieren zu arbeiten, die erst nach dem Herstellen des Formteils entfernt werden. Jedes Furnier weist einen erkennbaren Faserverlauf auf. Werden drei oder mehr kunstharzgetränkte Furniere in die Form eingelegt, so werden sie bevorzugt mit wechselndem Faserverlauf, z. B. kreuzweise geschichtet in die Form gelegt, so dass das herzustellende Formteil eine möglichst geringe Anisotropie aufweist. Vorteilhaft unterscheidet sich die Ausrichtung des Faserverlaufs bei zwei aufeinanderfolgenden Furnieren. Bevorzugt wird eine ungerade Anzahl von Furnieren, insbesondere 3, 5 oder 7 Furniere in die Form eingelegt. Werden drei oder mehr Furniere in die Form eingelegt, weist das Formteil später mindestens eine Mittellage und auf entgegengesetzten Seiten der Mittellage jeweils eine Außenlage auf. Dabei kann insbesondere die Mittellage bevorzugt aus drei oder mehr Lagen von Furnier zusammengesetzt sein. Die Außenlage des Formteils ist bevorzugt die äußerste Lage aus Furnier.

Die Form wird geschlossen und in eine Presse eingesetzt. Die Presse heizt die Form auf eine Temperatur von 100 °C bis 170 °C, bevorzugt von 130 °C bis 170 °C, auf und bringt einen Druck von 12 N/mm² bis 20 N/mm², bevorzugt von 15 N/mm² bis 20 N/mm² auf die Form auf. Es wird bevorzugt, die Form zunächst bis auf die maximale Temperatur zu erhitzen und erst anschließend den Pressdruck aufzubringen. Dies gewährleistet ein besonders schonendes Formen des Formteils, insbesondere ein schonendes Auflösen des Faserverbunds. Unter den Pressbedingungen bleibt die Form geschlossen. Die Pressdauer beträgt 5 Minuten/mm Plattendicke bis 20 Minuten/mm Plattendicke, vorteilhaft 10 Minuten/mm Plattendicke bis 15 Minuten/mm Plattendicke.

Unter den vorstehend genannten Pressbedingungen verflüssigt sich das duroplastische Kunstharz und füllt dabei Hohlräume im Holzfurnier und in der Form aus. Bei steigenden Temperaturen und fortschreitendem Aushärten des verflüssigten Kunstharzes wird Wasserdampf freigesetzt. Wasserdampf wird zusätzlich auch durch die aus dem Furnier austretende, restliche Feuchtigkeit freigesetzt. Der Wasserdampf erhöht den Druck in der Form weiter. Der Druck, der in der Form herrscht und der auf die Form aufgebracht wird, führt dazu, dass das oder die mit Kunstharz imprägnierten Furniere die Form gleichmäßig ausfüllen, um einen Druckausgleich herbeizuführen. Da Die Form Abschnitte enthält, die sich über die Dicke des Formteils hinaus in Z-Richtung erstrecken, z. B. Sicken, führt das Bestreben nach Druckausgleich dazu, dass der Faserverbund des Furniers mindestens teilweise aufgelöst wird, damit sich das Furnier jeweils in Richtung der X-, Y- und Z-Achse an die Form anpasst und diesen ausfüllt und so die Gestalt des herzustellenden Formteils annimmt. Gerade das Ausfüllen der Form in Richtung der Z-Achse durch das flüssige Kunstharz führt zu einer Überdehnung des Faserverbunds und zu einer mindestens teilweisen Auflösung des Faserverbunds. Dabei erstrecken sich die Abschnitte in Richtung der Z-Achse vorteilhaft aus der umgebenden Ebene heraus, die sich in Richtung der X- und Y-Achse erstreckt. Die sich in Richtung der Z-Achse erstreckenden Abschnitte sind also bevorzugt nicht-randständig innerhalb der sich in Richtung der X- und Y-Achse erstreckenden Ebene angeordnet. Dabei sind die Fasern des nun mindestens teilweise aufgelösten Furniers im duroplastischen Kunstharz eingebettet, das während des Pressvorgangs aushärtet. Nach einer bevorzugten Ausführung der Erfindung wird das Furnier mit dem umgebenden Kunstharz während des Pressens verdichtet, vorteilhaft so weit verdichtet, bis alle Zellzwischenräume und Zelllumina kollabiert sind. Durch das Entweichen des Wasserdampfs und das Einbetten in das duroplastische Kunstharz entsteht ein im Wesentlichen wasserfreies Formteil. Insbesondere wird das Furnier mit dem umgebenden Kunstharz auf eine Dichte von mehr als 1.100 kg/m³ verdichtet, vorteilhaft auf eine Dichte von 1.150 kg/m³ bis 1.500 kg/m³. Dies erweist sich für zahlreiche Anwendungen in technischen Geräten oder Gegenständen, z. B. als Abdeckung oder Gehäuse in heißer oder aggressiver Umgebung als vorteilhaft. Für zahlreiche solcher industrieller Anwendungen ist eine Dichte von 1.200 kg/m³ bis 1.450 kg/m3, insbesondere von 1.300 kg/m³ bis 1.450 kg/m³ ausreichend, so dass mit wirtschaftlichen Pressbedingungen ein dichtes, homogenes, weitgehen wasserfreies Formteil mit einer Restfeuchte von maximal 7 Gew.-% bezogen auf atro Holz bereitgestellt werden kann.

Nach dem Aushärten des Kunstharzes wird das Formteil entformt. Optional kann die Form zum schnelleren Entformen gekühlt werden, die Form kann aber auch bis zum Öffnen und Entformen des Formteils beheizt werden.

Wenn das Formteil in seiner späteren Verwendung besonderen Beanspruchungen wie z. B. einer aggressiven Umgebung wie Säuren oder Laugen, hohen Temperaturen oder mechanischen Belastungen ausgesetzt ist, dann wird nach einer vorteilhaften Ausführung der Erfindung eine Schicht von duroplastischem Kunstharz auf mindestens einer Außenseite des Formteils eingesetzt, z. B. eine Folie bzw. ein Blatt aus getrocknetem, aber noch nicht ausgehärtetem Kunstharz oder eine flüssige Schicht Kunstharz, die vor dem Pressen auf eine Außenlage des Formteils bzw. als Außenlage des Formteils aufgebracht wird. Diese Schicht aus Kunstharz auf mindestens einer Außenseite des Formteils bewirkt eine verbesserte Säure-, Laugen- und Temperaturbeständigkeit sowie eine verbesserte mechanische Belastbarkeit.

Die mechanischen Festigkeitseigenschaften des Formteils können weiter verbessert werden, wenn ergänzend zu dem Furnier mindestens eine Mittellage des Formteils aus einem Fasergewebe oder Fasergelege gebildet wird oder wenn ein Fasergewebe oder Fasergelege auf eine Außenlage des Formteils aufgebracht wird. Das Fasergewebe oder Fasergelege kann vor dem Pressen vorteilhaft ebenfalls mit duroplastischem Kunstharz imprägniert werden. Das Fasergewebe bzw. -gelege kann auf die Außenlage des Formteils aufgelegt sein, es wird aber auch als Mittellage eingesetzt. Es wird während des Pressens in das herzustellende Formteil integriert und verbessert durch die guten Festigkeitseigenschaften der jeweils im Gewebe oder Gelege enthaltenen Fasern die Festigkeitseigenschaften des Formteils insgesamt, z. B. die Biegefestigkeit. Bevorzugt wird eine einzelne Lage eines Fasergewebes oder Fasergeleges auf einem Furnier oder zwischen zwei Furnieren angeordnet. Das Fasergewebe oder Fasergelege weist bevorzugt Hanffaser, Flachsfaser, Glasfaser, Basaltfaser, eine Kunststofffaser wie z. B. eine Aramid- oder Polyamidfaser oder Kohlenstofffaser auf oder es ist aus Papier.

Die Form, die zum Herstellen des Formteils eingesetzt wird, ist in der Regel aus Metall und weist eine äußere Wand und einen Innenraum auf. Die äußere Wand weist einen Rand auf, der bevorzugt in der Presse dicht schließt, so dass während des Pressens kein Druck aus dem Innenraum entweichen kann. Der Innenraum weist im einfachsten Fall eine Erstreckung in Richtung der X-Achse und in Richtung der Y-Achse auf, die eine XY-Ebene definieren, mit einer im Verhältnis zur XY-Erstreckung geringen, gleichförmigen Erstreckung in Richtung der Z-Achse, so dass ein ebenes Formteil, meist als flache Platte, hergestellt wird.

Besonderen Vorteile des erfindungsgemäßen Verfahrens und des erfindungsgemäßen Formteils zeigen sich jedoch, wenn der Innenraum in Richtung der Z-Achse eine Erhebung oder eine Vertiefung aufweist, so dass ein Abschnitt des Formteils nicht in der durch die X-Achse und Y-Achse aufgespannten Ebene liegt. Die Höhe der Erhebung oder der Vertiefung in Richtung der Z-Achse aus der XY-Ebene heraus kann dabei größer sein als die Erstreckung in Richtung der Z-Achse, d. h., als die Dicke des Formteils. Mit einer solchen Form bzw. einem solchen Innenraum wird das herzustellende Formteil in Richtung der Z-Achse verformt. Mit dem erfindungsgemäßen Verfahren können z. B. Formteile aus mit duroplastischem Kunstharz imprägnierten Furnier hergestellt werden, die Sicken oder Nuten aufweisen, wie sie üblicherweise nur durch Tiefziehen von Folien oder Metall hergestellt werden können. Dabei kann z. B. eine Sicke oder Nut in Z-Richtung weiter aus der XY-Ebene herausragen als die Dicke des Formteils beträgt. Die Verformung in Z-Richtung kann typisch größer sein als die Dicke des Formteils, vorteilhaft mindestens das 2-Fache, bevorzugt mindestens das 3-fache der Dicke des Formteils betragen. Die Obergrenze der Verformbarkeit in Richtung der Z-Achse ergibt sich im praktischen Versuch.

Weiter betrifft die Erfindung ein Formteil, das mindestens ein Furnier und duroplastisches Kunstharz aufweist, wobei das Formteil eine Dichte von mehr als 1.100 kg/m³ aufweist und bei dem ein Faserverbund des Furniers mindestens abschnittsweise aufgelöst ist.

Beim erfindungsgemäßen Formteil ist das ursprünglich eingesetzte Furnier meist nach wie vor durch die weitgehend parallel verlaufenden Fasern erkennbar. Der Faserverbund ist jedoch mindestens abschnittsweise aufgelöst. Die Fasern des Furniers sind in duroplastisches Kunstharz eingebettet, so dass ein Formkörper bereitgestellt wird, dessen Oberfläche im Wesentlichen ausgehärtetes duroplastisches Kunstharz aufweist. Das erfindungsgemäße Formteil weist eine hohe Dichte auf, die mindestens 1.100 kg/m³ beträgt. Die maximale Dichte beträgt 1.500 kg/m³, bevorzugt beträgt die Dichte des Formteils ca. 1.150 kg/m³ , bis 1.200 kg/m³ bzw. bis 1.450 kg/m³. Die Dichte des Formteils liegt damit über der Dichte des Holzes, aus dem das Furnier hergestellt ist, das zur Herstellung des Formteils eingesetzt wurde. Damit ist das erfindungsgemäße Formteil -wie auch bereits vorstehend beschrieben- für zahlreiche Anwendungen im Bereich der Technik bzw. Industrie geeignet. Typische Anwendung findet das Formteil im Bereich der Automobiltechnik, z. B. als Abdeckung oder Gehäuse von insbesondere elektrischen Bauteilen wie Batterien, aber auch als Konstruktionselement von Fahrzeugen, beispielsweise als Bodenplatte oder Wand bzw. Wandelement.

Bevorzugt ist das Formteil mehrlagig aufgebaut, z. B. aus zwei oder mehr Lagen von Furnier, insbesondere aus einer ungeraden Anzahl von Furnieren. Das Formteil weist dann eine Mittellage und auf entgegengesetzten Seiten der Mittellagejeweils eine Außenlage auf. Dabei sind die Furniere vorteilhaft versetzt zueinander angeordnet, so dass der Faserverlauf eines Furniers in anderer Richtung verläuft als der Faserverlauf eines benachbarten Furniers. Auf diese Weise wird die Anisotropie des Formteils reduziert.

Wie bereits vorstehend beschrieben, kann das Formteil eine Außenlage aus Kunstharz aufweisen, um die Gebrauchseigenschaften des Formteils zu verbessern, insbesondere die Beständigkeit gegenüber Laugen, Säuren, hohen Temperaturen und mechanischer Belastung. So ist das erfindungsgemäße Formteil z. B. nach einer vorteilhaften Ausführung mindestens kurzfristig temperaturbeständig bis 1.200 °C.

Das Formteil kann gemäß vorstehender Beschreibung eine oder mehrere Lagen aus einem Fasergewebe oder Fasergelege aufweisen, die als Außen- oder als Mittellage Bestandteil des erfindungsgemäßen Formteils werden, um insbesondere die Festigkeitseigenschaften des Formteils zu verbessern.

Nach einer Weiterbildung der Erfindung weist das Formteil ein Flammschutzmittel, z. B: Ammoniumphosphat, auf. Das Flammschutzmittel kann vor dem Pressen des Formteils zugesetzt werden, z. b. durch Einmischen in das Kunstharz, durch Aufstreuen auf die Außenlage des Formteils oder durch Aufstreuen auf das Furnier bzw. Imprägnieren des Furniers mit einem Flammschutzmittel vor dem Auftragen des Kunstharzes. Eingesetzt werden z. B. zwischen 0,1 Gew.-% Flammschutzmittel bis 10 Gew.-% Flammschutzmittel bezogen auf das Gesamtgewicht des Formteils.

Es ist besonders bevorzugt, wenn das erfindungsgemäße Formteil in Z-Richtung verformt wird, so wie oben beschrieben. Erfindungsgemäß kann ein Formteil bereitgestellt werden, das an andere Bauteile passgenau angefügt werden kann. Beispielsweise können auf diese Weise Auskleidungen z. B. für Behälter oder von Fahrzeugen hergestellt werden, die nicht oder schwer entflammbar sind, die hitze- und kältebeständig sind und die hohen mechanischen Belastungen standhalten.

Details der Erfindung werden nachfolgend an Hand eines Ausführungsbeispiels näher erläutert. Es zeigt:
- Fig.1: eine perspektivische Ansicht eines Formteils, das in Z-Richtung verformt ist,
- Fig.2: eine schematische ausschnittsweise Darstellung eines Formteils mit aufgelöstem Faserverbund
- Fig.3: eine schematische Darstellung der Schichten des Formteils

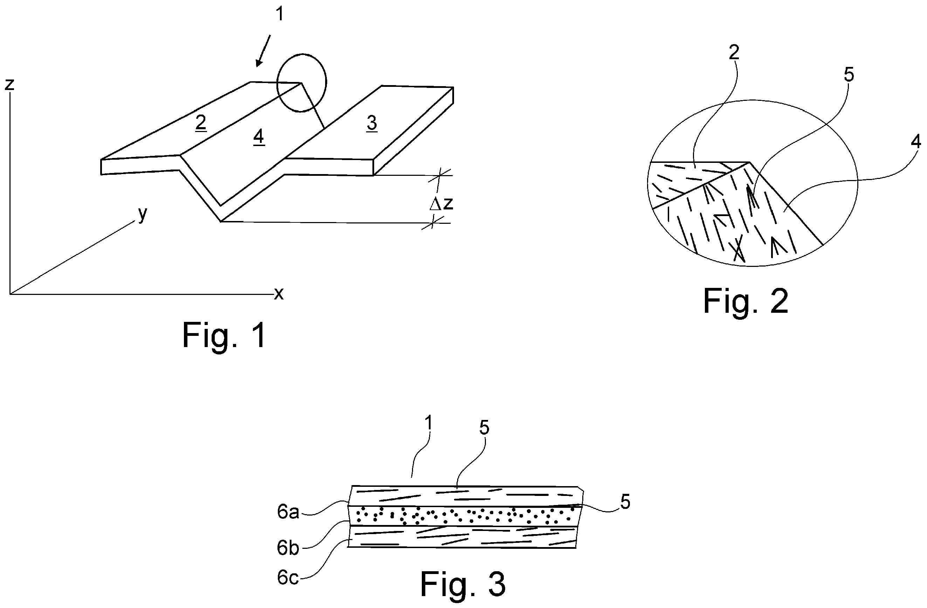

Fig.1 zeigt ein Formteil 1 aus Buchenfurnier mit einem Anteil von 35 Gew.-% Phenolharz mit einer Dichte von 1.400 kg/m³, das Abschnitte 2 und 3 aufweist, die in einer XY-Ebene verlaufen, die durch die Pfeile X und Y für die X-Achse und die Y-Achse dargestellt ist. Alternativ werden z. B. 25 Gew.-% Phenolharz eingesetzt, um das Buchenfurnier zu imprägnieren. Zwischen den Abschnitten 2,3 ist ein Abschnitt 4 angeordnet, der in Richtung der Z-Achse über die XY-Ebene hinaus nach unten verformt ist, wobei die Z-Achse durch den Pfeil Z angedeutet ist. Die Verformung in Z-Richtung, d. h., in Richtung oder entgegen der Richtung des Pfeils Z, beträgt das 2-Fache der Dicke des Formteils, die Verformung kann sich alternativ auch bis zum 3-fachen erstrecken. Die Dicke des Formteils 1 ist bei der vorliegenden Ausführung gleichmäßig und beträgt 2,3 mm. Die Dicke des Formteils kann aber auch variieren. Die Verformung in Z-Richtung von der Unterseite des Abschnitts 2 oder 3 bis zur Unterseite des Abschnitts, in Fig. 1 als ΔZ beträgt entsprechend hier 6,5 mm. Der Abschnitt 4 ist nicht-randständig zwischen den Abschnitten 2 und 3 angeordnet.

Im Abschnitt 4 und im Abschnitt 2 ist gemäß der Detailansicht von Fig. 2 der Faserverbund des zur Herstellung des Formteils 1 eingesetzten Buchenfurniers aufgelöst und einzelne Fasern oder Faserbündel 5 sind in das ausgehärtete Kunstharz, hier z. B. ein Phenolharz, eingebettet.

Fig.3 zeigt, das das Formteil 1 aus drei Lagen 6a, 6b und 6c von kunstharzgetränktem Buchenfurnier hergestellt wurde. Zwar ist der Faserverbund der Furniere mindestens teilweise aufgelöst, doch sind die Lagen 6a, 6b und 6c immer noch erkennbar. Der Faserverlauf der Außenlagen 6a, 6c ist parallel zueinander ausgerichtet, der Faserverlauf der Mittellage 6b ist um 90° gedreht zu den Außenlagen 6a, 6b angeordnet, so dass die Fasern der Mittellage 6b im Querschnitt zu sehen sind.

Das Formteil wird wie folgt hergestellt:
Das Furnier, hier ein Buchenschälfurnier, wird in feuchtem Zustand bereitgestellt, d. h., der Feuchtegehalt liegt über der Fasersättigungsfeuchte. Auf das feuchte Furnier wird flüssiges Kunstharz, z. B. Phenol- oder Melaminharz aufgebracht, bevorzugt beidseitig. Das Kunstharz wird in einer Menge von 20 Gew.-% bis 40 Gew.-%, z. B. von 30 Gew.-% bezogen auf das atro Furniergewicht aufgetragen, jeweils bezogen auf 100% Feststoff des Kunstharzes. Das Kunstharz kann ein Additiv enthalten, z. B. zur Steigerung der Brandbeständigkeit. Die feuchten, mit Kunstharz versehenen Furniere werden in einem Durchlaufofen mittels Warmluft getrocknet. Dabei entweicht Wasser sowohl aus dem Furnier als auch aus dem Kunstharz. Das aus dem Furnier entweichende Wasser wird durch das noch flüssige Kunstharz ersetzt, dass auf diese Weise das Furnier imprägniert. Das in der Folge ebenfalls trocknende Kunstharz härtet jedoch nicht aus. Es verliert durch das Trocknen jedoch seine Klebrigkeit und die imprägnierten Furniere können gut gelagert werden.

Mindestens ein, vorzugsweise aber eine ungerade Mehrzahl von Furnieren werden zum Herstellen des Formteils mit wechselndem Faserverlauf in eine Form geschichtet. Die Furniere können entweder bereits auf die Form zugeschnitten sein, z. B. durch Stanzen, oder Furnierscheren. Die Furniere können auch ohne präzise Anpassung an die Form in die Form geschichtet werden. Bei dieser Ausführung kann die Form ausreichend geschlossen werden, trotz überstehender Furniere oder der Rand der Form kann schneidenförmig ausgebildet sein, so dass beim Schließen der Form das überstehende Furniermaterial abgeschnitten wird. Optional kann ein Papier oder ein anderes Fasergelege oder -gewebe auf oder zwischen die Furnierlagen gelegt werden. Unterliegt das Formteil im Gebrauch besonderer mechanischer Beanspruchung, kann außen auf eine oder beide der Außenlagen ein Film aus Kunstharz gelegt werden, so dass sichergestellt ist, dass das Äußere des

Formteils aus Kunstharz gebildet ist.

Die Form ist aus Metall und erstreckt sich in Richtung X-, Y- und Z-Achse, jedoch bei dem vorliegenden Ausführungsbeispiel mit gleichbleibendem Abstand der Oberseite der Form von der Unterseite der Form. Alternativ kann die Dicke des Formteils variieren. Das herzustellende Formteil erstreckt sich also vorliegend in gleichbleibender Dicke in Richtung der X- und Y-Achse und ist abschnittsweise in Richtung der Z-Achse aus der XY-Ebene heraus verschoben, weil das herzustellende Formteil Sicken aufweisen soll. Die Sicken erstrecken sich abschnittsweise innerhalb der XY-Ebene. In kaltem Zustand ist das mit Kunstharz imprägnierte Furnier nicht sehr biegsam und füllt die durch die innere Oberfläche der Form vorgegebenen Räume nicht ohne weiteres aus.

Die Form wird durch das Einsetzen in die Presse und den sich aufbauenden Pressdruck von hier z. b. 15 N/mm² geschlossen. Durch das Erhitzen auf 160 °C verflüssigt sich das Kunstharz während der Pressdauer von hier 15 Minuten bei einer Dicke des Formteils von 2,3 mm. Dabei wird der Druck in der Form nochmals dadurch gesteigert, dass sich Wasserdampf aus der Restfeuchte der Furniere bzw. aus dem aushärtenden Kunstharz bildet. Der Druck kann so weit steigen, dass die Zellzwischenräume und Zelllumina kollabieren.

Durch die vorbeschriebenen Pressbedingungen verflüssigt sich das Kunstharz zunächst und das in das Kunstharz eingebettete Furnier füllt unter mindestens teilweiser Auflösung des Faserverbundes das Innere der Form gleichmäßig aus. Dabei wird ein Abschnitt 4 der übereinander angeordneten Furniere um z. B. das ca. 2-Fache der Dicke des Formteils in Z-Richtung aus der XY-Ebene heraus verschoben. Mit zunehmender Pressdauer härtet das Kunstharz aus und das gewünschte Formteil entsteht.

Mit Abschluss des Aushärtens endet der Pressvorgang. Zur Vorbereitung des Entformens kann die Form gekühlt oder bis zum Öffnen beheizt werden oder die Heizung wird nach Erreichen der vorgegebenen Pressdauer einfach abgeschaltet. Nach dem Öffnen der Form kann das Formteil entnommen werden. Es ist mit dem Entformen im Wesentlichen fertiggestellt, kann aber noch nachbearbeitet werden, z. B. durch Säubern der Kanten und dergleichen.

## Patentansprüche

1. Verfahren zum Herstellen eines Formteils (1), aufweisend ein Furnier (6a, 6b, 6c) und duroplastischen Kunstharz, mit den Schritten:
- Imprägnieren des Furniers (6a, 6b, 6c) mit dem duroplastischen Kunstharz,
- Einlegen des imprägnierten Furniers (6a, 6b, 6c) in eine Form,
- Schließen der Form und Pressen des imprägnierten Furniers (6a, 6b, 6c) bei erhöhter Temperatur und bei erhöhtem Druck
- Verflüssigen des duroplastischen Kunstharzes und mindestens teilweises Auflösen des Faserverbunds des Furniers (6a, 6b, 6c),
- Aushärten des duroplastischen Kunstharzes und
- Entformen des Formteils (1).

2. Verfahren nach Anspruch 1, **dadurch gekennzeichnet, dass** zwei oder mehr Furniere (6a, 6b, 6c) zum Herstellen des Formteils (1) eingesetzt werden.

3. Verfahren nach Anspruch 1 oder 2, **dadurch gekennzeichnet, dass** das Formteil (1) mindestens eine Mittellage und auf entgegengesetzten Seiten der Mittellage jeweils eine Außenlage aufweist.

4. Verfahren nach einem der vorstehenden Ansprüche, **dadurch gekennzeichnet, dass** eine Schicht duroplastischen Kunstharzes auf mindestens einer Außenlage angeordnet wird.

5. Verfahren nach einem der vorstehenden Ansprüche, **dadurch gekennzeichnet, dass** mindestens eine Mittellage oder eine Außenlage des Formteils (1) aus einem Fasergewebe oder einem Fasergelege gebildet wird.

6. Verfahren nach Anspruch 5, **dadurch gekennzeichnet, dass** das Fasergewebe oder Fasergelege Papier, Hanffaser, Flachsfaser, Glasfaser, Basaltfaser, Kunststofffaser oder Kohlenstofffaser aufweist.

7. Verfahren nach einem der vorstehenden Ansprüche, **dadurch gekennzeichnet, dass** eine Form eingesetzt wird, die das mit duroplastischem Kunstharz imprägnierte Furnier (6a, 6b, 6c) in Richtung der Z-Achse aus einer XY-Ebene heraus verformt.

8. Formteil, aufweisend mindestens ein Furnier (6a, 6b, 6c) und duroplastischen Kunstharz, mit einer Dichte von mehr als 1.100 kg/m³, bei dem ein Faserverbund des Furniers (6a, 6b, 6c) mindestens abschnittweise aufgelöst ist.

9. Formteil nach Anspruch 8, **dadurch gekennzeichnet, dass** das Formteil (1) eine Dichte von 1.150 kg/m³ bis 1.500 kg/m³, bevorzugt von 1.200 kg/m³ bis 1.450 kg/m³ aufweist.

10. Formteil nach Anspruch 8 oder 9, **dadurch gekennzeichnet, dass** das Formteil (1) mindestens eine Mittellage und auf entgegengesetzten Seiten der Mittellage jeweils eine Außenlage aufweist.

11. Formteil nach Anspruch 10, **dadurch gekennzeichnet, dass** eine Schicht von duroplastischem Kunstharz auf mindestens eine Außenlage angeordnet ist.

12. Formteil nach mindestens einem der Ansprüche 10 oder 11, **dadurch gekennzeichnet, dass** das Formteil (1) mindestens eine Mittellage oder eine Außenlage aus einem Fasergewebe oder Fasergelege aufweist.

13. Formteil nach Anspruch 11, **dadurch gekennzeichnet, dass** das Fasergewebe oder Fasergelege Papier, Hanf, Flachs, Glasfaser, Basaltfaser oder Kohlenstofffaser aufweist.

14. Formteil nach einem der Ansprüche 8 bis 13, **dadurch gekennzeichnet, dass** das Formteil (1) ein Flammschutzmittel aufweist.

15. Formteil nach einem der Ansprüche 8 bis 14, **dadurch gekennzeichnet, dass** das Formteil (1) in Richtung der Z-Achse aus einer XY-Ebene heraus verformt ist.
